# EUROPEAN PATENT SPECIFICATION

(11) **EP 4 033 110 B1**
(45) Date of publication and mention of the grant of the patent: **17.04.2024**
(21) Application number: 22152360.8
(22) Date of filing: 20.01.2022
(51) Int. Cl.: F16B 19/10

(54) **HOOKING DEVICE WITH UNDERCUT COUPLING**
EINHAKVORRICHTUNG MIT HINTERSCHNITTENER KUPPLUNG
DISPOSITIF DE CROCHET AVEC ACCOUPLEMENT CREUX

(30) Priority: 21.01.2021 IT 202100001007
(43) Date of publication of application: 27.07.2022
(73) Proprietor: Studio Piccagli Srl, 42046 Reggiolo (RE) (IT)
(72) Inventor: PICCAGLI, Antonio, 42046 REGGIOLO (REGGIO EMILIA) (IT)
(74) Representative: Paparo, Aldo

(56) References cited:
- US-A- 2 782 672
- US-A1- 2021 001 181

## Description

The present invention relates to a hooking device with an undercut coupling.

Therefore, the present invention falls within the technical field of devices used to hook bodies of various shapes and sizes, generally made of metal, and provided with specially shaped coupling portions.

In particular, these devices can be configured to couple with respective coupling portions projecting from the body to be moved or obtained inside it.

For example, these devices can be coupled to the bodies to be moved through threaded portions.

These devices can be used to hook bodies to be transported according to the needs of a generic production and/or storage process.

For example, such devices can be used to hook metal casings to painting lines.

Currently, hooking devices are present on the market comprising a hooking means for making the connection with the body to be moved, for example bolts or eyelets, and a means for coupling to the movement system, for example eyelets, hooks, carabiners or the like.

Generally, the bolts are screwed to the threaded holes present in the body to be transported so as to make the hooking device integral therewith. The coupling means defines the coupling of the hooking device to the movement system allowing, in this way, a movement of the body to be moved under the action of the movement system.

The bodies to be moved can be mechanical pieces of considerable weight and size and, thus, the connection between the hooking device and the body to be moved must therefore be particularly solid and safe.

Therefore, the threaded portion of the hooking device and of the body to be moved can have numerous screw pitches ensuring a firm connection between the hooking device and the body to be moved.

In particular, this coupling operation is carried out manually by an operator in charge or by an automatic drive. Basically, the operator must carry out numerous turns of the device to ensure that the required number of pitches of the device threads are coupled with the threads present in the body to be hooked, thus completing the operation.

In some cases, an annular abutment element can be provided which alerts the operator of the completion of the screwing of the device on the body to be moved.

An example of prior art is described in US2021001181.

Disadvantageously, the manual screwing operation requires particularly long times which, together with the fact that these operations are repeated numerous times during the production process, entail a reduction in the efficiency of the entire production process.

Disadvantageously, moreover, also due to the haste and repetitiveness of the operation, it may happen that the device is not fully screwed on the body to be hooked and therefore the connection between the hooking device and the body to be moved is not adequately firm, leading to the risk of detachment of the body from the hooking device, undermining the safety of the workplace.

In this context, the technical task underlying the present invention is to propose a hooking device with an undercut coupling which obviates the drawbacks of the prior art as cited above.

Specifically, the object of the present invention is to make available a hooking device with an undercut coupling which allows to facilitate and speed up the coupling and uncoupling procedures with a body to be moved.

A further object of the present invention is to make available a hooking device with an undercut coupling able to ensure high safety connection with the body to be moved.

Another object of the present invention is to provide a hooking device with an undercut coupling which allows to increase the efficiency of the production process.

The technical task set and the objects specified are substantially attained by a hooking device with an undercut coupling comprising the technical characteristics as set out in one or more of the accompanying claims. The dependent claims correspond to possible embodiments of the invention.

Further characteristics and advantages of the present invention will become more apparent from the indicative and thus non-limiting description of a preferred but non-exclusive embodiment of a hooking device with an undercut coupling, as illustrated in the appended drawings, in which:

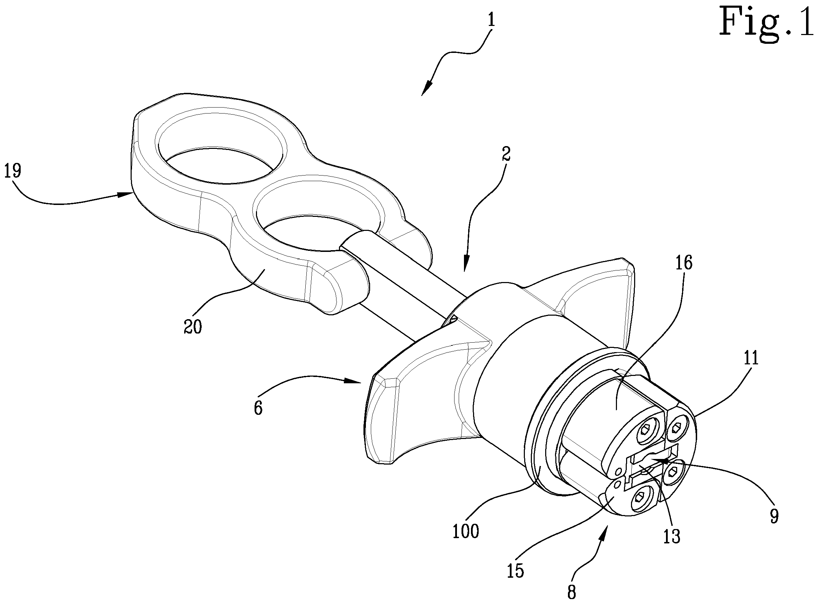

- figure 1 is a perspective view of a hooking device with an undercut coupling in accordance with a possible embodiment of the present invention;
- figures 2a-2b-2c are detailed perspective views of the hooking device with an undercut coupling of figure 1;
- figures 3a-3b are sectional views of the hooking device with an undercut coupling of figure 1 in accordance with different possible operating conditions;

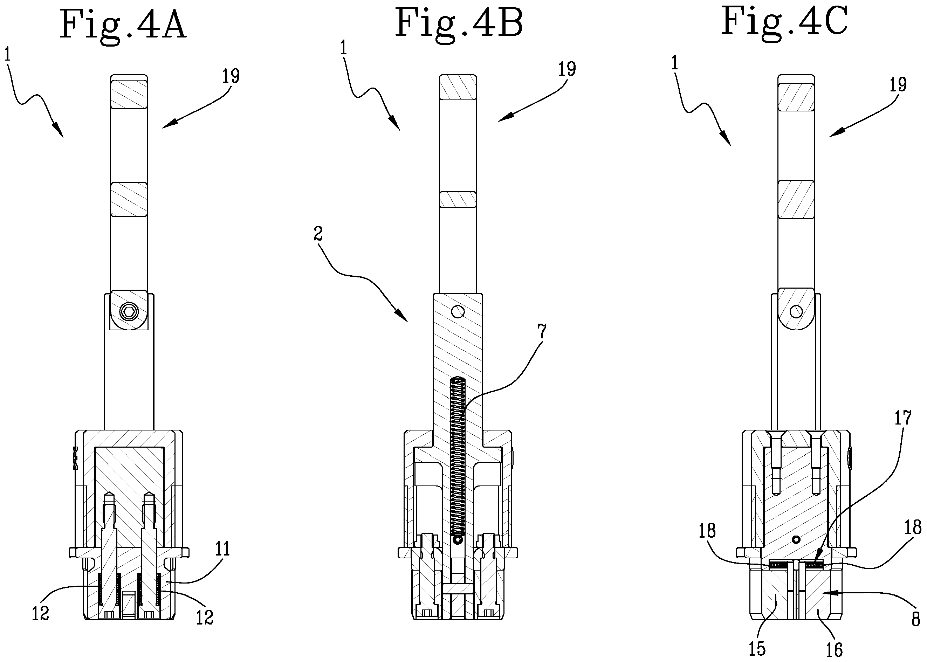

- figures 4a-4b-4c are further sectional views of the hooking device with an undercut coupling of figure 1.

With reference to the accompanying figures, the reference number 1 has been used to generally designate a hooking device with an undercut coupling, which will be referred to herein as device 1.

The device 1 comprises a hooking body 2 configured to realise a coupling with a body to be hooked.

As illustrated in the accompanying figures, the hooking body 2 comprises a coupling element 3 having at least one undercut 4 for realising a coupling with the body to be hooked, and a centring element 5, adapted to define a centring of the coupling element 3 relative to the body to be hooked.

Preferably, the coupling element 3 has a coupling surface "S" provided with at least one undercut.

Advantageously, the coupling surface "S" can have an arcuate conformation extending by an angle with a width of less than 180°, favouring a coupling between the hooking body 2 and the body to be hooked.

In this way, the coupling surface "S" facilitates the coupling between the hooking body 2 and the body to be hooked, for example, allowing the coupling element 3 and the undercut 4 to be inserted inside an opening, for example a threaded hole, of the body to be hooked without the need to realise a screwing between the two bodies.

In particular, the device 1 may comprise a limit stop body 100 connected or connectable to said hooking body and configured to define a limit stop for the relative movement between the hooking body 2 and the body to be hooked.

In other words, the limit stop body 100 can define a limit stop for the insertion of the hooking body 2 into the body to be hooked.

In accordance with a possible embodiment and as illustrated in the accompanying figures, the undercut 4 is defined by one or more radial reliefs or ridges projecting from the coupling element 3.

For example, the undercut 4 may comprise one or more threads or threaded portions.

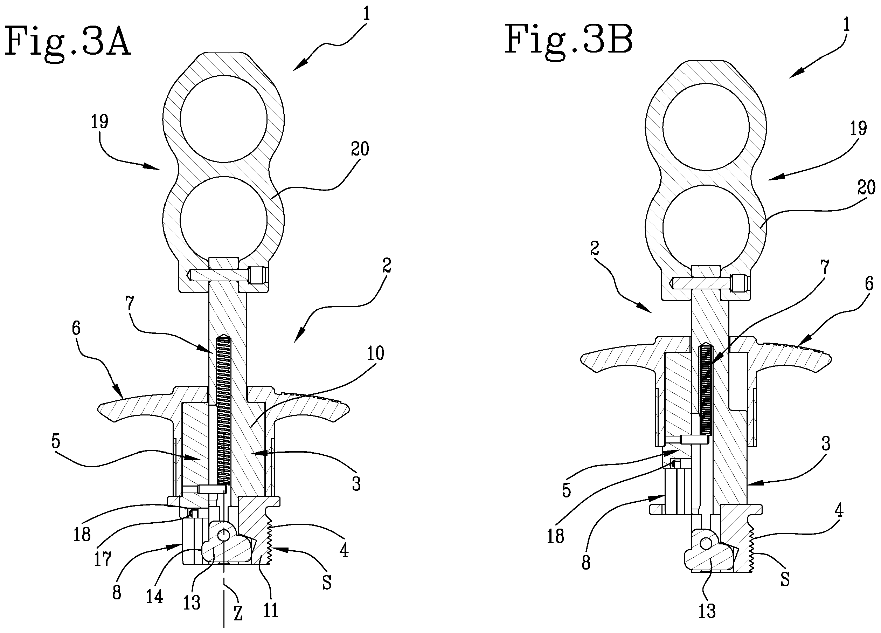

The coupling element 3 and the centring element 5 can be reversibly moved between a working position (figure 3a), in which the coupling element 3 and the centring element 5 are at least partially facing, defining a substantially cylindrical conformation extending along a direction of extension "Z" of the hooking body 2, and an insertion position (figure 3b), in which the coupling element and the centring element are at least partially translated reciprocally along the direction of extension "Z".

In other words, the coupling element 3 and the centring element 5 are reciprocally translatable between a working position in which they are facing in order to realise a coupling with the body to be hooked and an insertion position in which the centring element 5 is at least partially retracted with respect to the coupling element 3 so that the insertion of the undercut 4 in a suitable opening of the body to be hooked is allowed in such a way as to promote the coupling between the hooking body 2 and the body to be hooked.

Preferably, the device 1 comprises a gripping body 6 connected or connectable to the centring element 5 and configured to allow a reversible movement of the centring element 5 between the working position and the insertion position.

In other words, the device 1 comprises a gripping body 6 that can be gripped by a user to allow him an effective movement of the centering element between the aforementioned working position and insertion position.

Advantageously, moreover, the device 1 may comprise an elastic means 7, for example comprising spring bodies and/or the like, configured to promote a movement of the centring element 5 and of the coupling element 3 from the insertion position to the working position, preparing them for a subsequent coupling with the body to be hooked and making coupling operations between the device 1 and the body to be hooked more rapid.

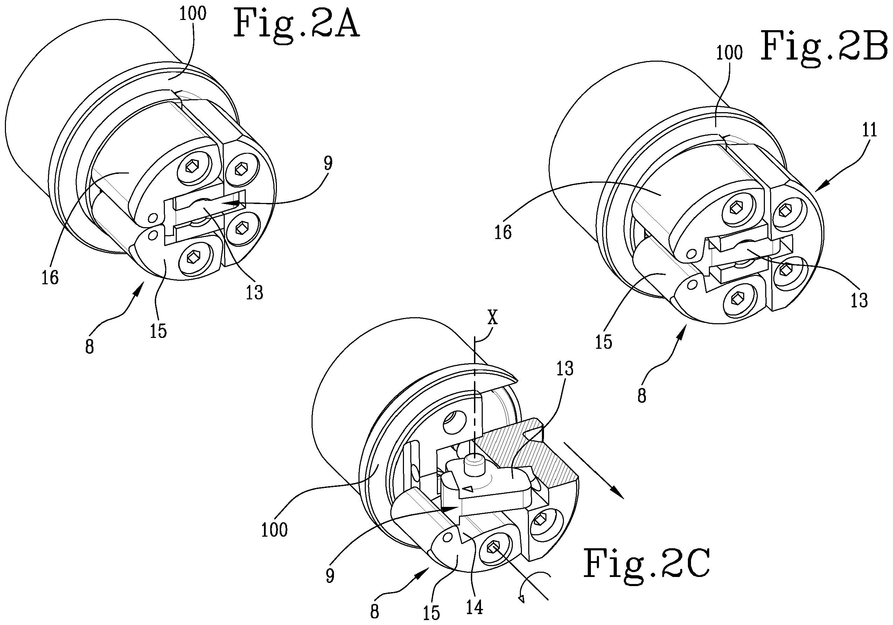

The device 1 further comprises a locking means 8 configured to switch the coupling body 2 reversibly between a configuration of minimum dimensions (figure 2a), wherein the coupling body 2 is coupled or couplable with play to the body to be hooked, and a configuration of maximum dimensions (figure 2b), wherein the locking means 8 is adapted to be activated on the body to be hooked, thereby defining a geometric interference between the hooking body 2 and the body to be hooked in order to prevent a relative movement between the hooking body 2 and the body to be hooked.

In other words, during the configuration of minimum dimensions the hooking body 2 can be at least partially movable with respect to the body to be hooked, during a configuration of maximum dimensions the hooking body 2 can be stably constrained to the body to be hooked.

In this way, the device 1 guarantees a highly effective coupling which allows the movement of the body to be hooked under conditions of high safety.

Preferably, the locking means 8, in the configuration of minimum dimensions, does not interact with the body to be hooked.

Preferably, moreover, the locking means 8, in the configuration of maximum dimensions, comes into contact with the body to be hooked.

In accordance with a possible embodiment and as illustrated in the accompanying figures, the device 1 comprises an activation means 9 operatively connected to the coupling element 3 and/or to the centring element 5.

In particular, the activation means 9 is configured to activate the aforementioned locking means 8.

Advantageously, the coupling element can comprise a first portion 10, slidably coupled to the centring element 5, and a second portion 11, having at least one undercut 4.

In particular, the second portion 11 can be slidably mounted on the first portion 10 and/or reversibly translatable between a position of maximum distancing (figures 2b, 2c), wherein it actuates the activation means 9, and a position of maximum nearing (figure 2a), wherein it does not actuate the activation means 9.

In this way, the relative movement between the first portion 10 and the second portion 11 can allow the actuation of the activation means 9 and, therefore, of the locking means 8.

For example, this relative movement can be promoted by the resulting action of the weight force of the body to be hooked onto the hooking body 2.

In fact, during the displacement, the body to be hooked can be connected to the second portion 11 of the coupling element 3 promoting and/or causing the relative movement between the first portion 10, for example connected to an external movement system, and the second portion 11.

Preferably, the device 1 comprises at least one spring 12 active between the first portion 10 and the second portion 11 and configured to promote a movement of the second portion 11 from the position of maximum distancing to the position of maximum nearing.

In accordance with a possible embodiment and as illustrated in the accompanying figures, the activation means 9 comprises an activation element 13.

In particular, the activation element 13 is activatable by an abutment surface of the second portion 11.

The activation element 13 can be reversibly movable between an active position (figures 2b, 2c), in which it abuts against a portion 14 of the locking means 8 so as to switch it to a configuration of maximum dimensions, and an inactive position (figure 2a) in which it does not abut and/or is not active on the locking means 8.

In other words, the locking means 8 has an activation portion 14 adapted to receive in abutment the activation element 13 for reversibly switching the hooking body 2 between the configuration of minimum dimensions and the configuration of maximum dimensions.

Preferably, the activation element 13 is rotatably connected to the first portion 10 of the coupling element 3 and rotatable relative to a rotation axis "X" that is transversal, preferably perpendicular to the direction of extension "Z".

Furthermore, the activation element 13 can operatively rest on the second portion 11 of the coupling element 3 to rotate between the active position and the inactive position.

In other words, the relative movement between the first portion 10 and the second portion 11 can result in the rotation of the activation element 13 between the active position and the inactive position.

In accordance with a possible embodiment and as illustrated in the accompanying figures, the locking means 8 is connected to the centring element 5.

Preferably, in the working position of the coupling element 3 and of the centring element 5, the locking means 8 is disposed at least partially opposite the at least one undercut 4 of the coupling element 3.

Advantageously, the locking means 8 comprises at least one movable part 15, 16 reversibly movable between a position of reduced radial dimensions, corresponding to the configuration of minimum dimensions of the coupling body 2, and a position of extended radial dimensions, corresponding to the configuration of maximum dimensions of the coupling body 2.

Furthermore, at least one movable part 15, 16 is adapted to abut on the body to be hooked to prevent a relative movement between the hooking body 2 and the body to be hooked.

The passage of the movable part 15, 16 from the position of reduced radial dimensions to the position of extended radial dimensions leads to the onset of a geometric interference between the hooking body 2 and the body to be hooked, guaranteeing a highly effective coupling during the movement of the body to be hooked.

In accordance with a possible embodiment and as illustrated in the accompanying figures, the locking means 8 very advantageously comprises a first movable part 15 and a second movable part 16 respectively pivoted on the centring element 5 so as to rotate reversibly between the position of reduced radial dimensions and the position of extended radial dimensions.

In particular, the activation means 9 can be operatively connected to the coupling element 3 to switch the first and second movable part 15, 16 at least from the position of reduced radial dimensions to the position of extended radial dimensions.

The presence of the first and second movable part 15, 16 allows the locking means 8 to be activated on distinct portions of the body to be hooked, ensuring an increased effectiveness of the coupling between the body to be hooked and the hooking body 2.

In accordance with a possible embodiment and as illustrated in the accompanying figures, the device 1 can comprise an elastic return means 17 configured to promote a movement of the hooking body 2 from the configuration of maximum dimensions to the configuration of minimum dimensions.

For example, the elastic return means 17 can comprise at least one elastic return spring 18 active on the first and second movable part 15, 16 to promote a movement from the configuration of maximum radial dimensions to the configuration of minimum radial dimensions.

Preferably, the elastic return spring 18 defines an action on the first and second movable part 15, 16 along a direction substantially parallel to the rotation axis "X" of the activation element 13 and/or perpendicular to the direction of extension "Z".

In other words, the action exerted by one (or more) elastic return spring 18 promotes an approach of the first and second movable part 15, 16 so as to cause the passage to the configuration of minimum dimensions.

According to further possible embodiments not illustrated in the accompanying figures, the elastic return means 17 can have different embodiments without the inventive concept underpinning the present invention being altered.

Advantageously, the device 1 can further comprise a connection body 19 connected or connectable to the hooking body 2 and configured to connect the hooking body 2 to an external movement system.

In particular, the connection body 19 comprises at least one connection eyelet 20, preferably a double one, connected to the coupling element 3. Preferably, the connection eyelet 20 is connected to the coupling element in a distal position with respect to the undercut 4.

It is therefore observed that the present invention reaches the proposed object by making available a hooking device which allows to facilitate and speed up the coupling and uncoupling procedures with a body to be moved thanks to the presence of a locking means configured to reversibly switch the coupling body between a configuration of minimum dimensions, wherein the coupling body is coupled or couplable with play to the body to be hooked, and a configuration of maximum dimensions, wherein the locking means is adapted to be activated on the body to be hooked, thereby defining a geometric interference between the hooking body and the body to be hooked to prevent a relative movement between the hooking body and the body to be hooked.

Advantageously, therefore, the hooking device increases the efficiency of the production process by reducing the times required for the coupling and uncoupling phases.

Advantageously, the locking means ensures a highly safe connection between the hooking device and the body to be moved by eliminating, limiting the play between the two bodies.

## Claims

1. A hooking device with an undercut coupling comprising:
- a hooking body (2) configured to realise a coupling with a body to be hooked;
wherein said hooking body (2) comprises a coupling element (3) having at least one undercut (4) for realising a coupling with the body to be hooked, and a centring element (5), adapted to define a centring of said coupling element (3) relative to said body to be hooked;
wherein said coupling element (3) and said centring element (5) are reversibly movable between a working position, in which said coupling element (3) and said centring element (5) are at least partially facing, thus defining a substantially cylindrical conformation extending along a direction of extension (Z) of said hooking body (2), and an insertion position, in which said coupling element (3) and said centring element (5) are at least partially translated reciprocally along said direction of extension (Z);
- a locking means (8) configured to switch said hooking body (2) reversibly between a configuration of minimum dimensions, wherein said hooking body (2) is couplable with play to said body to be hooked, and a configuration of maximum dimensions, wherein said locking means (8) is adapted to be activated on the body to be hooked, thereby defining a geometric interference between said hooking body (2) and the body to be hooked in order to prevent a relative movement between said hooking body (2) and the body to be hooked;
- an activation means (9) operatively connected to said coupling element (3) and resting on said centring element (5), said activation means (9) being configured to activate said locking means (8);
wherein said coupling element (3) comprises a first portion (10), slidably coupled to said centring element (5), and a second portion (11), having said at least one undercut (4); said second portion (11) being slidably mounted on said first portion (10) and reversibly translatable between a position of maximum distancing, wherein it actuates said activation means (9), and a position of maximum nearing, wherein it does not actuate said activation means (9).

2. The device in accordance with claim 1, wherein said locking means (8) in said configuration of minimum dimensions can not interact with the body to be hooked; and wherein in said configuration of maximum dimensions it can come into contact with said body to be hooked.

3. The device in accordance with claim 1, comprising at least one spring (12) active between said first and said second portion (11) and configured to promote a movement of said second portion (11) from said position of maximum distancing to said position of maximum nearing.

4. The device in accordance with claim 1 or 3, wherein said activation means (9) comprises an activation element (13) activatable by an abutment surface of said second portion (11), said activation element (13) being reversibly movable between an active position, wherein it abuts on a portion (14) of said locking means (8) so as to switch it from a configuration of maximum dimensions, and an inactive position, in which it is does not abut on said locking means (8).

5. The device in accordance with claim 4, wherein said activation element (13) is rotatably connected to said first portion (10) of said coupling element (3) and rotatable relative to a rotation axis that is transversal, preferably perpendicular, to said direction of extension (Z), said activation element (13) being operatively connected to said second portion (11) of said coupling element (3) so as to rotate between said active position and said inactive position.

6. The device in accordance with one or more of the preceding claims, wherein said locking means (8) is connected to said centring element (5), said locking means (8) being disposed at least partially opposite said at least one undercut (4) of said coupling element (3) in said working position.

7. The device in accordance with one or more of the preceding claims, wherein said locking means (8) comprises at least one movable part (15, 16) reversibly movable between a position of reduced radial dimensions, corresponding to said configuration of minimum dimensions of said hooking body (2), and a position of extended radial dimensions, corresponding to said configuration of maximum dimensions of said hooking body (2); and wherein said at least one movable part (15, 16) is adapted to abut on the body to be hooked to prevent a relative movement between said hooking body (2) and the body to be hooked.

8. The device in accordance with claim 7 when depending on one or more of claims 1, 3, 4, 5, wherein said locking means (8) comprises a first and a second movable part (15, 16) respectively pivoted onto said centring element (5) so as to rotate reversibly between said position of reduced radial dimensions and said position of extended radial dimensions; and wherein said activation means (9) is operatively connected to said coupling element (3) so as to switch said first and said second movable part (15, 16) at least from said position of reduced radial dimensions to said position of extended radial dimensions.

9. The device in accordance with one or more of the preceding claims, comprising an elastic return means (17) configured to promote a movement of said hooking body (2) from said configuration of maximum dimensions to said configuration of minimum dimensions.

10. The device in accordance with one or more of the preceding claims, wherein said coupling element (3) has a coupling surface provided with at least one undercut (4), said coupling surface having an arcuate conformation extending by an angle with a width of less than 180°.

11. The device in accordance with one or more of the preceding claims, wherein said at least one undercut (4) comprises one or more threads.

12. The device in accordance with one or more of the preceding claims, comprising a connection body (19) connectable to said hooking body (2) and configured to connect said hooking body (2) to an external movement system.

13. The device in accordance with one or more of the preceding claims, comprising a gripping body (6) connectable to said centring element (5) and configured to enable a reversible movement of said centring element (5) between said working position and said insertion position.

14. The device in accordance with one or more of the preceding claims, comprising an elastic means (7) configured to promote a movement of said centring element (5) and of said coupling element (3) from said insertion position to said working position.

15. The device in accordance with one or more of the preceding claims, comprising a limit stop body (100) connectable to said hooking body (2) and configured to define a limit stop to the relative movement between said hooking body (2) and the body to be hooked.

## Patentansprüche

1. Einhakvorrichtung mit einer hinterschnittenen Kupplung, umfassend:
- einen Einhakkörper (2), der ausgelegt ist, um eine Kupplung mit einem Körper herzustellen, der einzuhaken ist,
wobei der Einhakkörper (2) ein Kupplungselement (3) umfasst, das mindestens eine Hinterschneidung (4) zum Herstellen einer Verbindung mit dem Körper, der einzuhaken ist, und ein Zentrierelement (5) aufweist, das geeignet ist, um eine Zentrierung des Kupplungselements (3) relativ zu dem Körper, der einzuhaken ist, zu definieren,
wobei das Kupplungselement (3) und das Zentrierelement (5) zwischen einer Arbeitsposition, in der das Kupplungselement (3) und das Zentrierelement (5) mindestens teilweise zugewandt sind, wodurch sie eine im Wesentlichen zylindrische Ausgestaltung definieren, die sich entlang einer Erstreckungsrichtung (Z) des Einhakkörpers (2) erstreckt, und einer Einfügeposition reversibel bewegbar sind, in der das Kupplungselement (3) und das Zentrierelement (5) mindestens teilweise entlang der Erstreckungsrichtung (Z) wechselseitig verschoben werden;
- Verriegelungsmittel (8), die ausgelegt sind, um den Einhakkörper (2) reversibel zwischen einer Auslegung minimaler Abmessungen, in der der Einhakkörper (2) mit Spiel mit dem Körper, der einzuhaken ist, verkuppelbar ist, und einer Auslegung maximaler Abmessungen umzuschalten, in der die Verriegelungsmittel (8) geeignet sind, an dem Körper, der einzuhaken ist, aktiviert zu werden, wodurch eine geometrische Interferenz zwischen dem Einhakkörper (2) und dem Körper, der einzuhaken ist, definiert wird, um eine Relativbewegung zwischen dem Einhakkörper (2) und dem Körper, der einzuhaken ist, zu verhindern;
- Aktivierungsmittel (9), die betriebswirksam mit dem Kupplungselement (3) verbunden sind und auf dem Zentrierelement (5) ruhen, wobei die Aktivierungsmittel (9) ausgelegt sind, um die Verriegelungsmittel (8) zu aktivieren,
wobei das Kupplungselement (3) einen ersten Abschnitt (10), der verschiebbar mit dem Zentrierelement (5) gekuppelt ist, und einen zweiten Abschnitt (11) umfasst, der mindestens eine Hinterschneidung (4) aufweist; wobei der zweite Abschnitt (11) verschiebbar auf dem ersten Abschnitt (10) montiert ist und reversibel zwischen einer Position der maximalen Beabstandung, in der er die Aktivierungsmittel (9) betätigt, und einer Position der maximalen Annäherung, in der er die Aktivierungsmittel (9) nicht betätigt, verschiebbar ist.

2. Vorrichtung nach Anspruch 1, wobei die Verriegelungsmittel (8) in der Auslegung minimaler Abmessungen mit dem Körper, der einzuhaken ist, nicht zusammenwirken können; und wobei sie in der Auslegung maximaler Abmessungen mit dem Körper, der einzuhaken ist, in Kontakt kommen können.

3. Vorrichtung nach Anspruch 1, umfassend mindestens eine Feder (12), die zwischen dem ersten und dem zweiten Abschnitt (11) aktiv ist und ausgelegt ist, um eine Bewegung des zweiten Abschnitts (11) von der Position der maximalen Beabstandung in die Position der maximalen Annäherung zu fördern.

4. Vorrichtung nach Anspruch 1 oder 3, wobei die Aktivierungsmittel (9) ein Aktivierungselement (13) umfassen, das durch eine Anschlagfläche des zweiten Abschnitts (11) aktivierbar ist, wobei das Aktivierungselement (13) reversibel zwischen einer aktiven Position, in der es an einem Abschnitt (14) der Verriegelungsmittel (8) anliegt, um sie von einer Auslegung maximaler Abmessungen umzuschalten, und einer inaktiven Position bewegbar ist, in der es nicht an den Verriegelungsmitteln (8) anliegt.

5. Vorrichtung nach Anspruch 4, wobei das Aktivierungselement (13) drehbar mit dem ersten Abschnitt (10) des Kupplungselements (3) verbunden ist und relativ zu einer Drehachse drehbar ist, die quer, vorzugsweise senkrecht, zur Erstreckungsrichtung (Z) verläuft, wobei das Aktivierungselement (13) betriebswirksam mit dem zweiten Abschnitt (11) des Kupplungselements (3) verbunden ist, um sich zwischen der aktiven Position und der inaktiven Position zu drehen.

6. Vorrichtung nach einem oder mehreren der vorhergehenden Ansprüche, wobei die Verriegelungsmittel (8) mit dem Zentrierelement (5) verbunden sind, wobei die Verriegelungsmittel (8) mindestens teilweise gegenüber der mindestens einen Hinterschneidung (4) des Kupplungselements (3) in der Arbeitsposition angeordnet sind.

7. Vorrichtung nach einem oder mehreren der vorhergehenden Ansprüche, wobei die Verriegelungsmittel (8) mindestens einen beweglichen Teil (15, 16) umfassen, der reversibel zwischen einer Position mit reduzierten radialen Abmessungen, die der Auslegung minimaler Abmessungen des Einhakkörpers (2) entspricht, und einer Position mit ausgedehnten radialen Abmessungen bewegbar ist, die der Auslegung maximaler Abmessungen des Einhakkörpers (2) entspricht; und wobei der mindestens eine bewegliche Teil (15, 16) geeignet ist, um an dem Körper, der einzuhaken ist, anzuliegen, um eine Relativbewegung zwischen dem Einhakkörper (2) und dem Körper, der einzuhaken ist, zu verhindern.

8. Vorrichtung nach Anspruch 7, wenn abhängig von einem oder mehreren der Ansprüche 1, 3, 4, 5, wobei die Verriegelungsmittel (8) einen ersten und einen zweiten beweglichen Teil (15, 16) umfassen, die jeweils auf dem Zentrierelement (5) angelenkt sind, um sich reversibel zwischen der Position mit reduzierten radialen Abmessungen und der Position mit ausgedehnten radialen Abmessungen zu drehen; und wobei die Aktivierungsmittel (9) betriebswirksam mit dem Kupplungselement (3) verbunden sind, um den ersten und den zweiten beweglichen Teil (15, 16) mindestens von der Position mit reduzierten radialen Abmessungen in die Position mit ausgedehnten radialen Abmessungen umzuschalten.

9. Vorrichtung nach einem oder mehreren der vorhergehenden Ansprüche, umfassend elastische Rückstellmittel (17), die ausgelegt sind, um eine Bewegung des Einhakkörpers (2) von der Auslegung maximaler Abmessungen zu der Auslegung minimaler Abmessungen zu fördern.

10. Vorrichtung nach einem oder mehreren der vorhergehenden Ansprüche, wobei das Kupplungselement (3) eine Kupplungsfläche aufweist, die mit mindestens einer Hinterschneidung (4) ausgestattet ist, wobei die Kupplungsfläche eine bogenförmige Gestaltung aufweist, die sich um einen Winkel von weniger als 180° erstreckt.

11. Vorrichtung nach einem oder mehreren der vorhergehenden Ansprüche, wobei die mindestens eine Hinterschneidung (4) ein oder mehrere Gewinde umfasst.

12. Vorrichtung nach einem oder mehreren der vorhergehenden Ansprüche, umfassend einen Verbindungskörper (19), der mit dem Einhakkörper (2) verbindbar ist und ausgelegt ist, um den Einhakkörper (2) mit einem externen Bewegungssystem zu verbinden.

13. Vorrichtung nach einem oder mehreren der vorhergehenden Ansprüche, umfassend einen Greifkörper (6), der mit dem Zentrierelement (5) verbindbar ist und ausgelegt ist, um eine reversible Bewegung des Zentrierelements (5) zwischen der Arbeitsposition und der Einfügeposition zu ermöglichen.

14. Vorrichtung nach einem oder mehreren der vorhergehenden Ansprüche, umfassend elastische Mittel (7), die auslegt sind, um eine Bewegung des Zentrierelements (5) und des Kupplungselements (3) von der Einfügeposition zu der Arbeitsposition zu fördern.

15. Vorrichtung nach einem oder mehreren der vorhergehenden Ansprüche, umfassend einen Endanschlagkörper (100), der mit dem Einhakkörper (2) verbindbar ist und ausgelegt ist, um einen Endanschlag für die Relativbewegung zwischen dem Einhakkörper (2) und dem Körper, der einzuhaken ist, zu definieren.

## Revendications

1. Dispositif de crochet avec accouplement à encoche, comprenant :
un corps de crochet (2) configuré pour réaliser un accouplement avec un corps à accrocher ;
dans lequel ledit corps de crochet (2) comprend un élément d'accouplement (3) ayant au moins une encoche (4) pour réaliser un accouplement avec le corps à accrocher, et un élément de centrage (5), adapté pour définir un centrage dudit élément d'accouplement (3) par rapport audit corps à accrocher ;
dans lequel ledit élément d'accouplement (3) et ledit élément de centrage (5) sont mobiles de manière réversible entre une position de travail, dans laquelle ledit élément d'accouplement (3) et ledit élément de centrage (5) sont au moins partiellement en regard, définissant ainsi une conformation sensiblement cylindrique s'étendant le long d'une direction d'extension (Z) dudit corps de crochet (2), et une position d'insertion, dans laquelle ledit élément d'accouplement (3) et ledit élément de centrage (5) sont au moins partiellement translatés réciproquement le long de ladite direction d'extension (Z) ;
- des moyens de verrouillage (8) configurés pour commuter ledit corps de crochet (2) de manière réversible entre une configuration de dimensions minimales, dans laquelle ledit corps de crochet (2) peut être accouplé avec jeu audit corps à accrocher, et une configuration de dimensions maximales, dans laquelle lesdits moyens de verrouillage (8) sont adaptés pour être activés sur le corps à accrocher, définissant ainsi une interférence géométrique entre ledit corps de crochet (2) et le corps à accrocher afin d'empêcher un mouvement relatif entre ledit corps de crochet (2) et le corps à accrocher ;
- des moyens d'activation (9) fonctionnellement connectés audit élément d'accouplement (3) et reposant sur ledit élément de centrage (5), lesdits moyens d'activation (9) étant configurés pour activer lesdits moyens de verrouillage (8) ;
dans lequel ledit élément d'accouplement (3) comprend une première portion (10), accouplée de manière coulissante audit élément de centrage (5), et une seconde portion (11), ayant ladite au moins une encoche (4) ;
ladite seconde portion (11) étant montée de manière coulissante sur ladite première portion (10) et pouvant être translatée de manière réversible entre une position d'éloignement maximal, dans laquelle elle actionne lesdits moyens d'activation (9), et une position de rapprochement maximal, dans laquelle elle n'actionne pas lesdits moyens d'activation (9).

2. Dispositif selon la revendication 1, dans lequel lesdits moyens de verrouillage (8) dans ladite configuration de dimensions minimales ne peuvent pas interagir avec le corps à accrocher ; et dans lequel dans ladite configuration de dimensions maximales, ils peuvent venir en contact avec ledit corps à accrocher.

3. Dispositif selon la revendication 1, comprenant au moins un ressort (12) actif entre ladite première et ladite seconde portion (11) et configuré pour favoriser un mouvement de ladite seconde portion (11) de ladite position d'éloignement maximal à ladite position de rapprochement maximal.

4. Dispositif selon la revendication 1 ou 3, dans lequel lesdits moyens d'activation (9) comprennent un élément d'activation (13) pouvant être activé par une surface de butée de ladite seconde portion (11), ledit élément d'activation (13) étant mobile de manière réversible entre une position active, dans laquelle il se met en butée sur une portion (14) desdits moyens de verrouillage (8) de manière à les faire passer d'une configuration de dimensions maximales, et une position inactive, dans laquelle il ne se met pas en butée sur lesdits moyens de verrouillage (8).

5. Dispositif selon la revendication 4, dans lequel ledit élément d'activation (13) est connecté de manière rotative à ladite première portion (10) dudit élément d'accouplement (3) et peut tourner par rapport à un axe de rotation qui est transversal, de préférence perpendiculaire, à ladite direction d'extension (Z), ledit élément d'activation (13) étant connecté de manière opérationnelle à ladite seconde portion (11) dudit élément d'accouplement (3) de manière à tourner entre ladite position active et ladite position inactive.

6. Dispositif selon une ou plusieurs des revendications précédentes, dans lequel lesdits moyens de verrouillage (8) sont connectés audit élément de centrage (5), lesdits moyens de verrouillage (8) étant disposés au moins partiellement à l'opposé de ladite au moins une encoche (4) dudit élément d'accouplement (3) dans ladite position de travail.

7. Dispositif selon une ou plusieurs des revendications précédentes, dans lequel lesdits moyens de verrouillage (8) comprennent au moins une partie mobile (15, 16), mobile de manière réversible entre une position de dimensions radiales réduites, correspondant à ladite configuration de dimensions minimales dudit corps de crochet (2), et une position de dimensions radiales étendues, correspondant à ladite configuration de dimensions maximales dudit corps de crochet (2) ; et dans lequel ladite au moins une partie mobile (15, 16) est adaptée pour se mettre en butée sur le corps à accrocher pour empêcher un mouvement relatif entre ledit corps de crochet (2) et le corps à accrocher.

8. Dispositif selon la revendication 7, lorsqu'elle dépend d'une ou plusieurs des revendications 1, 3, 4, 5, dans lequel lesdits moyens de verrouillage (8) comprennent une première et une seconde partie mobile (15, 16) respectivement pivotées sur ledit élément de centrage (5) de manière à tourner de manière réversible entre ladite position de dimensions radiales réduites et ladite position de dimensions radiales étendues ; et dans lequel lesdits moyens d'activation (9) sont connectés de manière opérationnelle audit élément d'accouplement (3) de manière à commuter ladite première et ladite seconde partie mobile (15, 16) au moins de ladite position de dimensions radiales réduites à ladite position de dimensions radiales étendues.

9. Dispositif selon une ou plusieurs des revendications précédentes, comprenant des moyens de rappel élastique (17) configurés pour favoriser un mouvement dudit corps de crochet (2) de ladite configuration de dimensions maximales à ladite configuration de dimensions minimales.

10. Dispositif selon une ou plusieurs des revendications précédentes, dans lequel ledit élément d'accouplement (3) a une surface d'accouplement pourvue d'au moins une encoche (4), ladite surface d'accouplement ayant une conformation arquée s'étendant selon un angle d'une largeur inférieure à 180°.

11. Dispositif selon une ou plusieurs des revendications précédentes, dans lequel ladite au moins une encoche (4) comprend un ou plusieurs filets.

12. Dispositif selon une ou plusieurs des revendications précédentes, comprenant un corps de connexion (19) pouvant être connecté audit corps de crochet (2) et configuré pour connecter ledit corps de crochet (2) à un système de mouvement externe.

13. Dispositif selon une ou plusieurs des revendications précédentes, comprenant un corps de préhension (6) pouvant être connecté audit élément de centrage (5) et configuré pour permettre un mouvement réversible dudit élément de centrage (5) entre ladite position de travail et ladite position d'insertion.

14. Dispositif selon une ou plusieurs des revendications précédentes, comprenant des moyens élastiques (7) configurés pour favoriser un mouvement dudit élément de centrage (5) et dudit élément d'accouplement (3) de ladite position d'insertion à ladite position de travail.

15. Dispositif selon une ou plusieurs des revendications précédentes, comprenant un corps de fin de course (100) pouvant être connecté audit corps de crochet (2) et configuré pour définir une fin de course au mouvement relatif entre ledit corps de crochet (2) et le corps à accrocher.
